# EUROPEAN PATENT APPLICATION

(11) **EP 3 241 440 A1**
(43) Date of publication of application: **08.11.2017**
(21) Application number: 17161760.8
(22) Date of filing: 20.03.2017
(51) Int. Cl.: A21B 1/22

(54) **FLOOR STRUCTURE FOR ELECTRIC OVENS, PARTICULARLY OF THE PROFESSIONAL TYPE FOR PIZZAS**

(30) Priority: 05.05.2016 IT UA20163173
(71) Applicant: Moretti Forni S.p.A., 61037 Mondolfo (PU) (IT)
(72) Inventor: Moretti, Mario, 61021 Pesaro (IT)
(74) Representative: Gustorf, Gerhard

(57) **Abstract**

Floor structure for electric ovens, particularly of the professional type for pizzas, and preferably of the type with heating deck (3) made of multi-perforated refractory material (5) orthogonally to the dimension of the thickness of a plurality of parallel grooves (5) for introducing and housing at least one electrical resistor, preferably spiral-shaped passing through it in a coil-like fashion for delivery and return into the adjacent holes (5), characterized in that it comprises a further cooking deck (7) made of refractory material, superimposed to the heating deck (3) incorporating the resistors, removable and replaceable to form a spare deck (3) simply used for replacement in case of breakage or heat stress or other reasons.

## Description

### DETAILED DESCRIPTION

### Field of the art

Professional electric ovens for making pizzas in restaurants and/or take away joints have heating elements positioned in cooking deck, beneath / inside the cooking surface, and on the roof of the cooking chamber.

With particular reference to the cooking deck, so-called floor, it is usually, or rather, necessarily, made of refractory material with the aim of maintaining the right temperature and spread heat in the most homogeneous manner possible.

Still with the aim of obtaining maximum homogeneity possible, the heating means, i.e. the electrical resistors, are not usually arranged beneath the refractory deck forming the floor, but therein.

This kind of solution combining resistors and cooking deck is implemented by providing for cavities in the thickness of the latter, usually a plurality of parallel horizontal through openings, into which the resistors are fixed, often in a coiled fashion.

As a matter of fact, no matter how robust the insulating material may be, the decks of this kind cannot have a high thickness, due to the weight and electrical energy dissipation required to heat considerable thickness.

### Limits of the prior art

The functional optimization of an electric oven in general and for pizzas in particular, pursues the uniform distribution of heat in the cooking chamber and thus entails the enhancement of the thermal wheel and prompt response to the activation of heating sources with reduction of energy consumption.

The prior art solution that most explores this kind of optimization differs from the armoured resistors arranged beneath the cooking deck, representing the most adopted solution, to provide for spiral-shaped resistors embedded in the cooking deck, contingently provided with compartments or seats, for obtaining a heating deck that combines the thermal wheel, with mass of the cooking surface made of refractory material, and the response rapidity, with instantaneous incandescence of the spiral-shaped resistors.

According to this prior art such heating decks are arranged both at the top (roof) and bottom (floor) of the cooking chamber.

A drawback of this prior art technique, in an ideal functional condition, lies in the possibility of breakage - due to knocks and heat stress - of the refractory that forms the heating deck of the cooking surface, with the ensuing need of often replacing the entire floor, with demanding interventions both in terms of time and space that require disassembling the oven as well as inoperative times.

Degli esempi di forni elettrici secondo la tecnica nota sono costituiti dai documenti brevettuali n. US1553357A, n. EP2471371A1 e n. DE202009011934U1, i quali mostrano i limiti sopra riferiti.

### Objects of the invention

Thus, in this context, the main object of the present invention is to provide an innovative structure of a cooking deck for professional electric ovens, particularly for pizzas, capable of enabling adopting the heating system with a multi-perforated refractory plate heating arranged transverse to the thickness with spiral-shaped resistors passing through them in a delivery and return coiled fashion in adj acent holes, resistant against breakages and cracks due to knocks and heat shocks.

Another object of the present invention is to attain the previous object through an innovative concept that does not affect the usual operating systems of professional catering operators and that can be adapted to pre-existent structures.

Another object of the present invention is to attain the previous objects through an innovative concept that is easy to handle for the operators.

Another object of the present invention is to attain the previous objects through an innovative concept that is simple and efficient, safe in use and at a relatively economic cost considering the results practically attainable therewith.

### Summary of the invention

These and other objects are attained through a floor structure for electric ovens according to the present invention, particularly of the professional type for pizzas, and preferably of the type with heating deck (3) made of multi-perforated refractory material (5) orthogonally to the dimension of the thickness of a plurality of parallel grooves (5) for introducing and housing at least one electrical resistor, preferably spiral-shaped passing through it in a coil-like fashion for delivery and return into the adjacent holes (5), characterized in that it comprises a further cooking deck (7) made of refractory material, superimposed to the heating deck (3) incorporating the resistors, removable and replaceable to form a spare deck (3) simply used for replacement in case of breakage or heat stress or other reasons.

### Description of the attached drawings

Further characteristics and advantages of the floor structure for electric ovens according to the present invention shall be more apparent from the following detailed description of a preferred but non-exclusive embodiment thereof, represented solely by way of non-limiting example with reference to the attached drawing, wherein:
Figure 1 illustrates a sectional perspective view of a professional electric oven for pizzas comprising a cooking chamber provided with a floor structure according to the present invention;
Figure 2 illustrates - in detail - a schematic section of the floor structure for electric ovens according to the present invention.

### Description of the embodiment

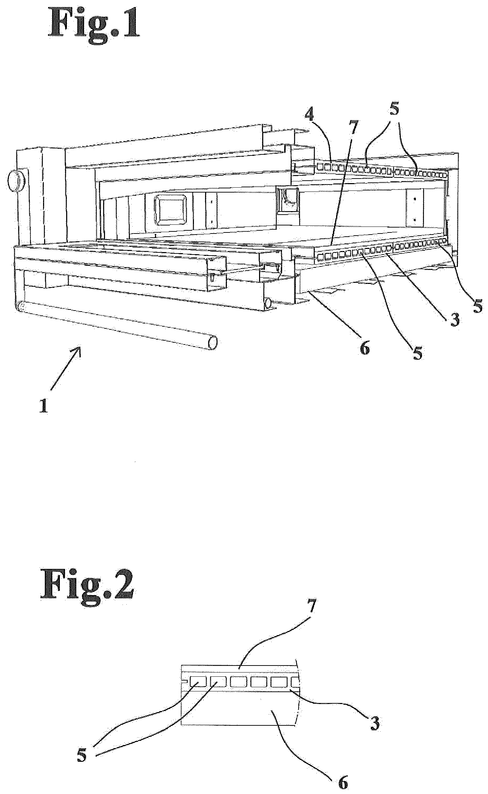

With reference to such figures, and in particular to figure 1, a professional electric oven for food products, for example specifically for pizzerias, comprising an electrically heated cooking chamber 2, of the type with floor and roof respectively constituted by a bottom plate 3 and a top plate 4 made of refractory material, is indicated with 1.

Both the bottom plate or deck 3 and the top plate or deck 4, are multi-perforated, orthogonally to the dimension of the thickness, in several parallel through grooves 5, for introducing and housing an electrical resistor, not illustrated, preferably spiral-shaped, passing there through in a delivery and return coil-like fashion in adjacent holes 5, running therein, exiting at one end and entering in the adjacent one, and so on and so forth.

Such type of heated plates perforated orthogonally with respect to the thickness with spiral-shaped through electrical resistors, which can obviously be more than one, connected in series or parallel, currently represents the ideal solution to jointly obtain the results of cooking and reducing running costs in professional electric ovens for pizzerias.

As a matter of fact, the spiral-shaped resistors embedded in the base refractory deck and in the roof refractory deck combine the ability to exploit heat maintenance, so-called thermal wheel, thanks to the mass of the plate made of refractory material, and the prompt response to temperature increase demands, for contingent greater volumes of cooking sessions due to the inconsistency of customer presence, with immediate incandescence of the spiral-shaped resistors which, located in the body of the plate, are closer to the radiation surface with respect to resistors arranged on the other side of the plate with reference to the cooking compartment.

Beneath the bottom plate or deck 3 there is arranged, according to the prior art, a lower insulating thickness 6.

Above the bottom plate or deck 3 there is arranged, according to the present invention, a spare deck 7 made of refractory material, that can be freely inserted and removed from the cooking chamber 2.

With the aim of optimizing the ratio between thermal wheel and prompt response to increase of the electric charge that traverses the section of the conductor in the time unit, i.e. increase the intensity of the current set to attain heat increase, the thickness of the spare deck 7 is preferably markedly lower than that of the heating plate 3 in which the resistors are embedded.

The preferred ratio, considering the same refractory material it is made of, is a third; at the same time, preferably, the thickness of the heating plate 3 in which the resistors are embedded is half the lower insulating plate 6, as illustrated in figure 2.

Thus, the cooking surface of the cooking chamber 2 is constituted by the spare deck 7, which features all the characteristics of the refractory deck for direct cooking, all characteristics for optimizing the ratio between thermal wheel and prompt response to amperage increase and simultaneously, in case of breakage, for any reason they intervene, may be immediately replaced in loco, even using spare parts kept by the user, without requiring complex interventions and removal operations that are required by the replacement of the perforated heating plates orthogonally to the thickness with spiral-shaped through electrical resistors.

### Alternative embodiments

It is obvious that in further alternative embodiments still falling within the innovation concept subject of the embodiment illustrated above and claimed below, the floor structure for electric ovens according to the present invention, may be implemented through equivalent methods and structural techniques, i.e. with further supplementary solutions, same case applying to application parameters that can be varied to suit the purpose.

### Advantages of the invention

As observable from the preceding detailed description of a preferred embodiment and as previously mentioned regarding some variant embodiments, the floor structured for electric ovens according to the present invention offers advantages corresponding to attaining the pre-set and other objects: it integrates a solution such to protect the heating deck maintaining the optimal ratio between thermal wheel and prompt response to amperage increase of the heating decks with resistors embedded therein.

### KEY TO REFERENCE NUMBERS

1) oven in its entirety
2) cooking chamber
3) bottom heating plate
4) top heating plate
5) parallel through grooves for housing resistors
6 lower insulating thickness
7) spare deck

## Claims

1. Floor structure for electric ovens of the professional type for pizzas of the type with heating deck (3) made of multi-perforated refractory material (5) for housing the electrical resistor, **characterized in that** it comprises a cooking deck (7) made of refractory material removable and replaceable, superimposed leaning against said heating deck (3) made of multi-perforated refractory material (5) for housing the electrical resistor.

2. Floor structure for electric ovens of the professional type for pizzas of the type with heating deck (3) made of multi-perforated refractory material (5) orthogonally to the dimension of the thickness of a plurality of parallel grooves (5) for introducing and housing at least one electrical resistor, preferably spiral-shaped passing through it in a coil-like fashion for delivery and return into the adjacent holes (5), **characterized in that** it comprises a cooking deck (7) made of refractory material, superimposed leaning against said heating deck (3) incorporating the resistors, removable and replaceable to form a spare deck (3) simply used for replacement in case of breakage or heat stress or other reasons.

3. Floor structure for electric ovens according to claim one and/or two **characterized in that** said cooking deck (7) made of refractory material has a thickness smaller than that of the underlying heating deck (3).

4. Floor structure for electric ovens according to claim one and/or two **characterized in that** said cooking deck (7) made of refractory material has a thickness equivalent to a third of the thickness of the underlying heating deck (3).

5. Floor structure for electric ovens according to claim one and/or two **characterized in that** said cooking deck (7) made of refractory material has a thickness equivalent to a third of the underlying heating deck (3) which in turn has a thickness equivalent to half of a further underlying insulating deck (6).
